# EUROPEAN PATENT APPLICATION

(11) **EP 2 045 413 A1**
(43) Date of publication of application: **08.04.2009**
(21) Application number: 07805868.2
(22) Date of filing: 17.07.2007
(51) Int. Cl.: E04F 13/07, B32B 9/00, B32B 33/00

(54) **METHOD OF ATTACHING DECORATIVE SHEET**

(30) Priority: 21.07.2006 JP 2006199724
(71) Applicant: Tokuyama Corporation, Shunan-shi, Yamaguchi 745-8648 (JP)
(72) Inventor: FUJIMOTO, Tadashi, Shunan-shi Yamaguchi 745-8648 (JP); HIGASHI, Nobuhiko, Shunan-shi Yamaguchi 745-8648 (JP)
(74) Representative: Jackson, Martin Peter
(86) International application number: PCT/JP2007/064392
(87) International publication number: WO 2008/010587

(57) **Abstract**

A method of attaching a decorative sheet in the method of bonding the decorative sheet onto the surface of an underlying material having a corner portion, the decorative sheet having a decorative layer comprising an inorganic cured material formed on one surface of a substrate sheet, the method of attaching a decorative sheet comprising a partly cutting step of preparing the decorative sheet having a cover sheet formed on the surface of the decorative layer maintaining a stripping strength, and incising the decorative layer via the cover sheet in a portion of the decorative sheet corresponding to the corner portion of the underlying material; a folding step of folding the decorative sheet along the incision in a manner that the substrate sheet is on the inside; a bonding step of bonding the substrate sheet of the decorative sheet onto the surface of the underlying material by using an adhesive in a manner that the folded portion of the decorative sheet is in agreement with the corner portion of the underlying material; an external corner-treating step of filling a putty in a gap resulting from the incision in the decorative sheet; and a stripping step of stripping the cover sheet from the decorative sheet. The method makes it possible to easily attach the decorative sheet having the decorative layer comprising an inorganic cured material to the underlying material having a corner portion without requiring any particular skill.

## Description

### <Technical Field>

This invention relates to a novel method of attaching a decorative sheet to a underlying material such as wall or pole. More specifically, the invention relates to a method of attaching a decorative sheet when corner portions are formed on the working surface of the underlying material.

### <Background Art>

A decorative sheet is used as a decorative material for the underlying materials such as plasterboards and wood boards in the interior finish work of the houses. A decorative sheet made from a resin such as polyvinyl chloride or the like is used in many cases owing to its cost and workability.

However, since the finishing surface formed by the decorative sheet has substantially poor ventilating property, the ventilating property possessed by the underlying material is impaired by the decorative sheet. Besides, the decorative sheet forms dew on the surface thereof arousing such problems as growth of mold and stripping of the decorative sheet.

Therefore, an inorganic decorative sheet comprising an inorganic cured material formed on the surface of a substrate sheet has been proposed to substitute for the decorative sheet made from the resin. For example, the present inventors have proposed a decorative sheet having a decorative layer of a cured material of calcium carbonate formed by carbonating a calcium hydroxide, that is formed on the surface of a substrate sheet (see patent document 1). The inorganic decorative sheet has an appearance closely resembling that of a wet finished material such as a plaster, has a good ventilating property, and effectively solves the above-mentioned problems.

However, the above inorganic decorative sheet has a decorative layer that is formed by using an inorganic cured material which is brittle, and involves a problem concerning the working method thereof when it is to be attached to the underlying material that has corner portions on the working surface thereof (on the surface on where the underlying material is attached).

That is, the decorative sheet made from the resin has excellent flexibility and can be folded at the corner portion of the underlying material so as to be continuously bonded. With the inorganic decorative sheet, however, the decorative layer is brittle and is cracked if it is folded along the corner portion. In this case, even if it is attempted to enhance the flexibility by mixing a resin to the decorative layer to a degree that will not impair the ventilating property, it is still difficult to so fold the inorganic decorative sheet along the corner portion of the underlying material as will not to develop the cracking.

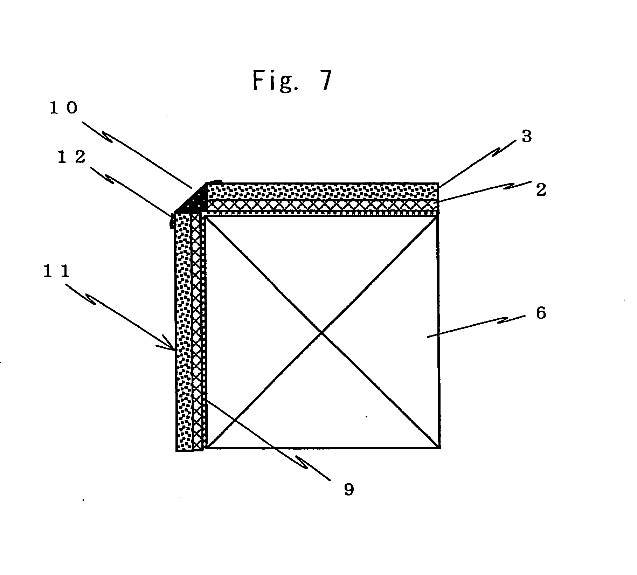

Therefore, when it is attempted to attach the inorganic decorative sheet having a decorative layer of an inorganic cured material formed on the surface of the substrate sheet to the underlying material, means is not quite employed to attach a piece of decorative sheet by folding it. Instead, two pieces of decorative sheets 11 are abut at the corner portion of the underlying material 6 as shown, for example, in Fig. 7, are bonded via an adhesive layer 9, and a putty 10 is applied to a gap portion formed at the corner portion as a finishing work.

According to the above work of abutting two pieces of decorative sheets, however, it is difficult to form a constant gap at the abut portion. Besides, in applying the putty 10 to the gap in the finishing step, it is quite difficult to maintain a constant thickness (width) of putty along the ridge of the corner portion, requiring skill and laborious work of a worker. Moreover, the putty 10 overflows on the surface of the decorative sheet 11, and quite a lot of work and time are required for removing those portions 12 on where the putty 10 has overflowed.

Patent document 1: Japanese Unexamined Patent Publication JP-A-7-331831

### <Disclosure of the Invention>

It is therefore an object of the present invention to provide a method of attaching an inorganic decorative sheet by solving the above-mentioned problems that arouse at the time of attaching the inorganic decorative sheet to the underlying material having corner portions.

In order to solve the above problems, the present inventors have forwarded the study, have discovered that a folded portion can be formed along the corner portion of the underlying material maintaining very good precision and excellent fancy design by making a cover sheet present on the surface of a decorative layer of an inorganic cured material maintaining a particular stripping strength that can be stripped after the work has been done but that does not strip during the working, incising the decorative layer from the side of the cover sheet at a portion corresponding to the corner portion of the underlying material of the decorative sheet, and folding the decorative sheet along the incision so as to be bonded to the underlying material, that the cover sheet works as a masking when a putty is filled in the gap (incision) in the decorative layer of the decorative sheet after the working reliably preventing the putty from overflowing onto the decorative layer, and have thus completed the present invention.

That is, according to the present invention, there is provided a method of attaching a decorative sheet in the method of bonding the decorative sheet onto the surface of an underlying material having a corner portion, the decorative sheet having a decorative layer comprising an inorganic cured material formed on one surface of a substrate sheet, the method of attaching a decorative sheet comprising:
(a) a partly cutting step of preparing the decorative sheet having a cover sheet formed on the surface of the decorative layer maintaining a stripping strength, and incising the decorative layer via the cover sheet leaving at least part of the substrate sheet in a portion of the decorative sheet corresponding to the corner portion of the underlying material;
(b) a folding step of folding the decorative sheet having incision formed in the decorative layer along the incision in a manner that the substrate sheet is on the inside;
(c) a bonding step of positioning the decorative sheet in a manner that the folded portion of the decorative sheet is in agreement with the corner portion of the underlying material, and bonding the substrate sheet of the decorative sheet onto the surface of the underlying material by using an adhesive;
(d) an external corner-treating step of filling a putty in a gap resulting from the incision formed in the folded portion of the decorative sheet bonded to the surface of the underlying material; and
(e) a stripping step of stripping the cover sheet from the decorative sheet having the putty filled in the gap thereof.

In the method of the invention, it is desired that:
(1) The cover sheet formed on the surface of the decorative layer of the decorative sheet has a stripping strength of 200 to 4000 mN/25 mm; and
(2) The inorganic cured material forming the decorative layer is a calcium carbonate cured material formed by carbonating the calcium hydroxide.

According to the present invention, the decorative sheet (i.e., inorganic decorative sheet) forming the decorative layer comprising an inorganic cured material on one surface of the substrate sheet can be attached to the corner portion of the underlying material by using a piece of decorative sheet. Further, owing to the function of the incision formed in the cover sheet on the surface of the decorative layer and the incision formed in the decorative layer through the cover sheet, it is allowed to attach the decorative sheet to the corner portion of the underlying material maintaining a very high precision and efficiency without impairing fancy design.

That is, according to the present invention, the cover sheet and the decorative sheet (decorative layer) are closely adhered together maintaining a suitable degree of strength. Therefore, upon being folded, the decorative sheet is entirely broken along the incision formed in the portion corresponding to the corner portion of the underlying material in a manner that at least the cover sheet is completely cut, forming a broken surface maintaining very good fancy design. Further, the decorative sheet is retaining the substrate sheet at least partly. Therefore, the decorative sheet can be handled as a piece of the decorative sheet offering good workability. Besides, the decorative layer forms a constant gap (portion broken along the incision) maintaining good precision. Further, the cover sheet is left at the time when the gap in the decorative layer is filled with the putty. Even when the putty has overflowed, therefore, the overflowed putty can be easily removed by finally stripping the cover sheet off.

### <Brief Description of the Drawings>

Fig. 1 is a schematic view (sectional view) illustrating a representative embodiment of a decorative sheet used in the method of the present invention;
Fig. 2 is a schematic view (sectional view illustrating a state of the decorative sheet which is incised in a partly cutting step in the method of the present invention;
Fig. 3 is a schematic view (sectional view) illustrating a state of the decorative sheet which is folded in a folding step in the method of the present invention;
Fig. 4 is a schematic view (sectional view) illustrating a state of the decorative sheet which is bonded to the corner portion of the underlying material in a bonding step in the method of the present invention;
Fig. 5 is a schematic view (sectional view) illustrating a state of the decorative sheet which has a putty filled in the incision in an external corner-treating step in the method of the present invention;
Fig. 6 is a schematic view (sectional view) illustrating a state of the decorative sheet from which a cover sheet is stripped in a stripping step in the method of the present invention; and
Fig. 7 is a schematic view (sectional view) illustrating a state of the decorative sheet attached to the corner portion of the underlying material according to a conventional method.

### <Best Mode for Carrying Out the Invention>

In the present invention, there is no particular limitation on the underlying material to which the decorative sheet is to be attached provided it has a corner portion. The decorative sheet is the one used for the interior finish work of the houses, and the present invention is applied to the cases where the decorative sheet is to be attached to the underlying materials having corner portions, such as walls, poles and beams of the houses. The corner portions of the underlying material, usually, have an angle of 90 degrees (right angles). However, it needs not be pointed out that the invention can be applied to the corner portions of acute angles and obtuse angles, too.

There is no particular limitation, either, on the underlying material provided it permits the decorative sheet to be bonded thereto. For example, the plasterboards, wood boards and cement walls are the generally employed underlying materials.

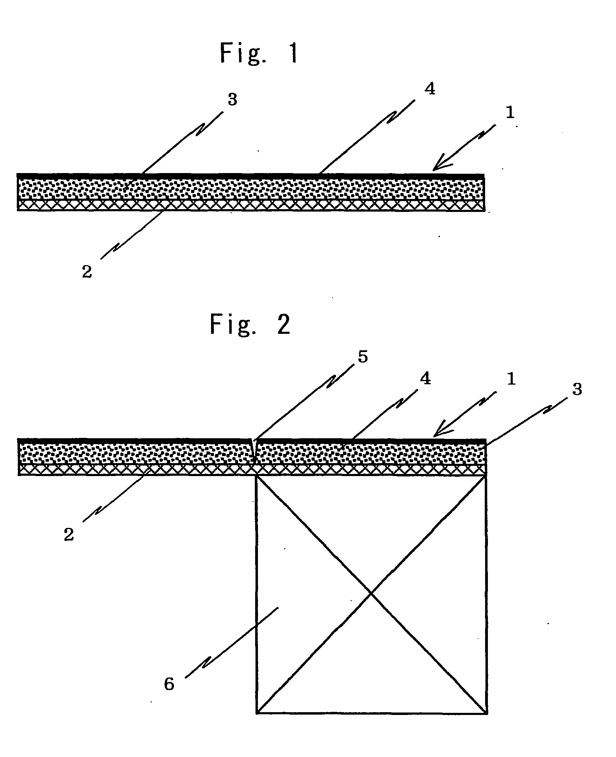

Referring to Fig. 1 which schematically illustrates the structure of the decorative sheet used in the present invention, the decorative sheet generally designated at 1 has a structure in which a decorative layer 3 comprising an inorganic cured material is formed on one surface of a substrate sheet 2. A cover sheet 4 is formed on the surface of the decorative sheet 3 maintaining a stripping strength.

In the present invention, the decorative sheet 1 is attached to the underlying material (designated at 6 in Fig. 2) having corner portions through the partly cutting step (a), folding step (b), bonding step (c), external corner-treating step (d) and stripping step (e).

In the decorative sheet 1, the substrate sheet 2 must not be broken in the folding step (b) and is, therefore, formed by using a sheet-like material having flexibility. Further, the substrate sheet 2 has a thickness of, usually, 0.1 to 3 mm and, preferably, 0.3 to 2 mm. It is, further, desired that the substrate sheet 2 is formed by using a material having good affinity to the inorganic cured material in order to maintain close adhesion to the inorganic cured material that is forming the decorative layer 3.

As the preferred substrate sheet 2, there can be used highly permeable papers such as calcium carbonate paper, aluminum hydroxide paper, glass fiber paper, and lined paper for walls; and woven or nonwoven fabrics comprising fibrous materials, such as glass fiber, vinylon fiber, polypropylene fiber, polyester fiber, polyethylene terephthalate fiber, acrylic fiber, aramide fiber and carbon fiber. Among them, the glass fiber paper is particularly preferred owing to its high wet strength, small decrease in the strength caused by water contained in the adhesive, stable flexibility and excellent adhesion to the underlying material 6.

It is, further, desired that the inorganic cured material constituting the decorative layer 3 contains an inorganic cured material component such as calcium carbonate, cement or gypsum as at least part of the bonding component. To obtain the properties of the inorganic cured material to a sufficient degree, however, it is desired that the inorganic cured material component is contained in an amount of not less than 70% by weight. Further, though there is no particular limitation, it is desired that the decorative layer 3 has a thickness of, generally, in a range of 100 to 2000 µm.

In the decorative sheet 1 used in the invention, it is desired that the inorganic cured material forming the decorative layer 3 is a cured material of calcium carbonate. Concretely, the decorative layer 3 is most desirably formed by using the cured material of calcium carbonate obtained by carbonating the calcium hydroxide (slaked lime). Described below is a method of forming the decorative layer 3 by using the cured material of calcium carbonate. The decorative layer 3, however, can similarly be used even by using any other inorganic cured materials.

In order to enhance the adhesion to the substrate sheet 2, first, a layer of an uncured material is formed on the surface of the substrate sheet 2 and is cured to thereby form the decorative layer 3. When the decorative layer 3 is to be formed by using the cured material of calcium carbonate, a kneaded material containing the calcium hydroxide and water is applied onto the surface of the substrate sheet 2, and the calcium hydroxide in the kneaded material is reacted with carbon dioxide so as to be carbonated and cured to thereby obtain the decorative layer 3.

The carbonatation reaction of calcium hydroxide quickly proceeds up to a conversion of about 50% but, thereafter, proceeds mildly. The calcium component exhibits its binder function to a sufficient degree after the conversion (carbonatation factor) of the carbonatation reaction has exceeded about 50%. That is, in a stage where the carbonatation factor has exceeded 50% and, particularly, about 60%, the layer of the kneaded material works as the decorative layer 3.

As the calcium hydroxide used for forming the decorative layer 3, those comprising chiefly the calcium hydroxide can be used without any particular limitation, such as slake lime for industrial use, plaster, dolomite plaster and the like.

A variety of additives can be added to the decorative layer 3 depending upon the properties required for the building materials. The additives will be, for example, solid component of an aqueous emulsion, fiber, inorganic fine skeletal material, active fine particles, pigment and the like. The decorative layer 3 may further contain blending agents that are desirably added from the standpoint of production as will be described later.

The solid component of the aqueous emulsion works to improve the toughness of the decorative layer 3, to improve the bonding strength between the decorative layer 3 and the substrate sheet 2, and to improve the stripping strength of the cover sheet 4 formed on the surface of the decorative layer 3. In particular, the strength of the cover sheet 4 against being stripped can be further increased by blending the solid component of the aqueous emulsion in a suitable amount.

As the aqueous emulsion, an emulsion obtained by dispersing a monomer, an oligomer or a polymer thereof in an aqueous medium can be used without any particular limitation. Concrete examples include synthetic high molecular emulsions of the type of acrylic resin, vinyl acetate and styrene/butadiene rubber. That is, the aqueous emulsion is made present in the decorative layer 3 in the form of a solid component of the emulsion since water which is a dispersant evaporates at the time when the calcium hydroxide undergoes the carbonatation to form the calcium carbonate.

As the fiber, a known fiber used for the decorative layer 3 can be employed without any particular limitation. Concrete examples include glass fiber, vinylon fiber, polypropylene fiber, polyester fiber, polyethylene terephthalate fiber, acrylic fiber, aramide fiber, carbon fiber and metal fiber. Further, the fiber may be in the form of staple fiber, filaments, woven fabric or nonwoven fabric. Among them, the staple fiber is particularly effective in improving the toughness and cutting workability of the decorative layer, and can be desirably used. Though there is no particular limitation, it is desired that the staple fiber, usually, has a length of 1 mm to 10 mm and, particularly, 2 mm to 6 mm and a diameter of 5 to 50 µm and, particularly, 10 to 30 µm from the standpoint of further improving the toughness and cutting workability of the decorative layer 3.

As the inorganic fine skeletal material, there can be used, for example, calcium carbonate (which does not work as a bonding component), silica sand, lime sand, mica, glazing silica sand, glazing mica, ceramic sand, glass beads or pearlite having an average particle size of 0.001 to 2 mm. It is desired that the inorganic fine skeletal material has an average particle size of 0. 003 to 1. 0 mm. As the active fine particles, further, there can be exemplified water granulated blast furnace slag, fly ash, silica fume and the like.

As the pigment, there can be used those that are usually used for the plaster work or, concretely, metal oxides such as iron oxide, titanium oxide and chromium oxide as well as various stone powders having an average particle size of 0.5 to 50 µm.

It needs not be pointed out that the decorative layer 3 may further be blended with various additives that can be added to the inorganic cured material that forms the decorative layer 3 not being limited to only those additives that are described above.

Though there is no particular limitation on the amounts of adding the above additives, there is no problem if the amount of the solid component of the aqueous emulsion is 0.5 to 18% by weight, preferably, 2 to 15% by weight, if the amount of the fiber is 0.1 to 5% by weight in the case of the staple fiber, if the amount of the inorganic fine skeletal material is not larger than 70% by weight and, preferably, not larger than 60% by weight, and if the amount of the pigment is not larger than 5% by weight in terms of percent by weight in the decorative layer 3 in which the calcium hydroxide has all been carbonated into the calcium carbonate.

In the decorative sheet 1 used in the present invention, the cover sheet 4 is provided on the surface of the decorative layer 3 maintaining a stripping strength of preferably 200 to 4000 mN/25 mm and, particularly, 800 to 3000 mN/25 mm. That is, as will be described later in detail, after the decorative sheet 1 is attached to the corner portion of the underlying material 6 and the putty is filled in the gap formed at the corner portion, the cover sheet 4 must be stripped off. For this purpose, the cover sheet 4 must be provided maintaining a stripping strength. Here, in the steps of attaching the decorative sheet 1 to the corner portion of the underlying material 6, the stripping strength must be greater than a certain value in order for the cover sheet 4 to exhibit its function to a sufficient degree.

The stripping strength is measured by using a sample of a width of 25 mm at a pulling rate of 300 mm/min. in compliance with JIS-K6854, Method of Testing Adhesive - Stripping Bonding Strength, Section II: 180-Degree Stripping.

Though there is no particular limitation on means for obtaining the above stripping strength, it is desired to closely bond the cover sheet 4 to the decorative layer 3 without separately using an adhesive in order not to adversely affect the decorative layer 3. Concretely, it is most desired to laminate the cover sheet right after a mixture of the calcium hydroxide and water is applied onto the surface of the substrate sheet in order to form the decorative layer 3 on the surface of the substrate sheet 2, and to cure the layer of the mixture in this state. According to this method, the cover sheet is closely adhered and fixed to the decorative layer 3 maintaining a predetermined stripping strength in the step where the calcium hydroxide is carbonated by being reacted with carbon dioxide. The stripping strength between the layers is adjusted by adjusting the material of the cover sheet 4, composition that contains the curing component used for forming the decorative layer 3 and, particularly, by adjusting the blended amounts of the components that affect affinity of the aqueous emulsion.

There is no particular limitation on the conditions for forming the decorative layer 3 by curing (carbonating) the layer of the kneaded material provided the decorative layer 3 maintains a predetermined strength. When the calcium hydroxide is contained as a curing component, however, it is desired that at least either the substrate sheet 2 or the cover sheet 4 has permeability from the standpoint of enabling the curing component to efficiently undergo the curing.

Described below with reference to Figs. 2 to 6 are the steps of attaching the above decorative sheet 1 to the underlying material 6 having corner portion.

### Partly cutting step (a):

Referring to Fig. 2, in the method of the present invention, the decorative sheet 1 is, first, attached to the underlying material 6 and is incised as designated at 5 in a portion corresponding to the corner portion of the underlying material 6 through the cover sheet 4 by using a cutter or the like. The depth of incision 5 at least cuts through the cover sheet 4 to reach the decorative layer 3. In this case, the incision 5 may reach the substrate sheet 2 cutting through the decorative layer 3. Here, however, it is necessary that the substrate 2 is not completely cut through but is at least partly left, as a matter of course.

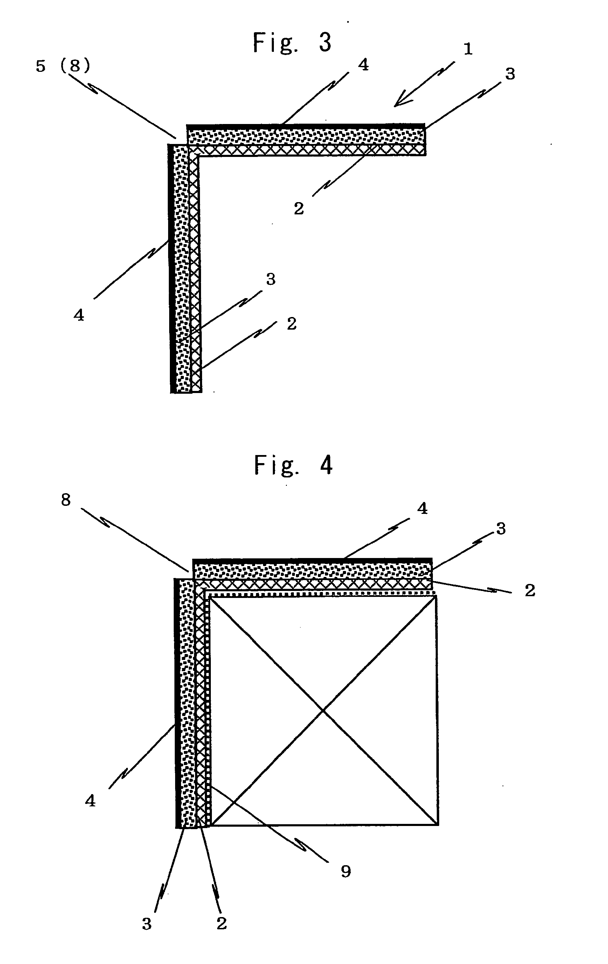

That is, the cover sheet 4 and the decorative layer 3 are bonded together maintaining a suitable strength. Upon incising the decorative sheet 1 as designated at 5 and folding, at next step, the decorative sheet 1, therefore, the decorative layer 3 is neatly broken along the incision 5, and a broken surface is obtained exhibiting a very highly fancy design. Further, the decorative sheet 1 still has the substrate sheet 2 without being cut away. Therefore, the decorative sheet 1 having incision 5 formed therein can be easily handled as a piece of material, enabling the sheet 1 to be easily worked at the corner portion, and accurately and constantly maintaining the width of gap (designated at 8 in Figs. 3 and 4) formed by the expansion of incision 5 over the full length of the folded portion of the decorative sheet 1.

In the partly cutting step (a), there is no particular limitation on the method of determining the cutting position (determining the position of incision 5). For example, the position may be measured by using a ruler relying on the size of the underlying material. Or, as shown in Fig. 2, the position may be determined by directly effecting the positioning at the corner portion on the site. Further, the incising work is, usually, done by putting the ruler to the decorative sheet and incising the cover sheet 4 with a cutter maintaining a predetermined depth. To adjust the depth of incision 5, here, it is desired to use a cutter of which the blade length is adjusted to be the depth of incision, since this makes it possible to incise maintaining a predetermined depth.

### Folding step (b):

In the folding step (b) that follows the partly cutting step (a) as shown in Fig. 3, the decorative sheet 1 is folded along the incision 5 with the surface on the side of the base sheet 2 as the inside. Though there is no particular limitation on the folding method, it is, usually, desired to fold the decorative sheet 1 by using a jig having corner portion or by really using the underlying material onto which the decorative sheet is to be attached while bringing the portion forming the incision 5 into contact with the corner portion. As will be learned from Fig. 3, the decorative layer 3 is greatly torn along the incision 5 accompanying the folding, exhibiting neatly broken sectional surface and forming a gap 8 of a predetermined width.

### Bonding step (c):

In the bonding step (c) as shown in Fig. 4, the decorative sheet 1 is bonded to the underlying material 6 by using an adhesive 9 in a manner that the gap 8 formed by tearing along the incision 5 corresponds to the corner portion. Though there is no particular limitation, the adhesive 9 is, desirably, of the type of non-organic solvent, such as starch or carboxymethyl cellulose (CMC) from the standpoint of safety and effect on the environment.

In the step (c) of bonding the decorative sheet 1 described above, the decorative sheet 1 may be stuck to the underlying material 6 by applying the adhesive 9 onto the back surface of the substrate sheet 2, or the adhesive 9 may be applied onto the surface of the underlying material 6 and then the decorative sheet 1 may be stuck thereon.

It is desired that the bonding step (c) is effected after the decorative sheet 1 is folded through the folding step (b) since the decorative sheet 1 can be so positioned that the gap 8 formed by tearing along the incision 5 can be correctly corresponded to the corner portion of the underlying material 8. Depending upon the cases, however, the folding step (b) and the bonding step (c) may be simultaneously executed. That is, as shown in Fig. 2, the decorative sheet 1 having the incision 5 is positioned on the underlying material 6, and is folded along the corner portion of the underlying material 6 to thereby execute the folding step (b) and the bonding step (c) simultaneously.

### External corner-treating step (d):

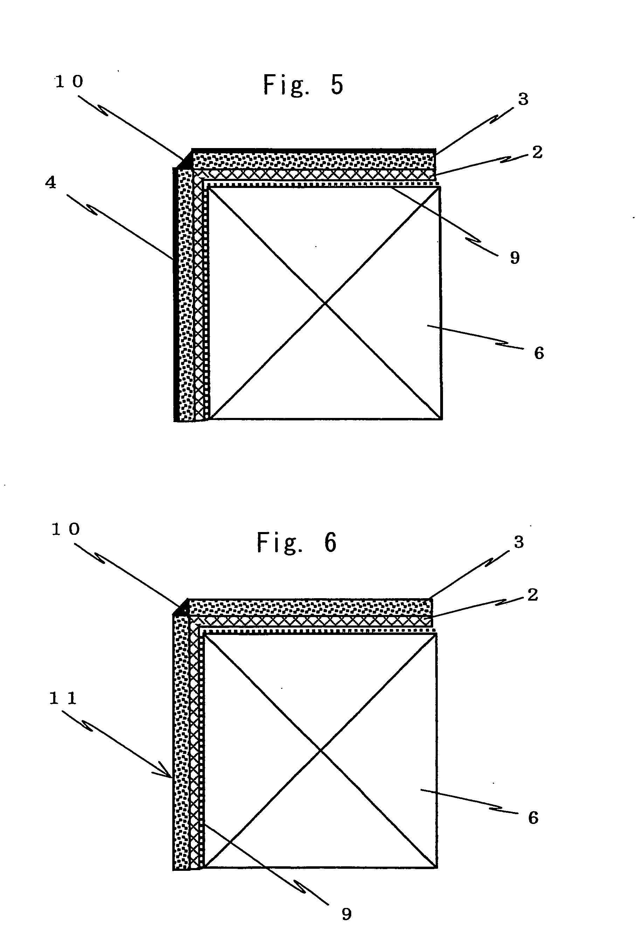

In this step (d) as shown in Fig. 5, the gap 8 formed in the decorative sheet 1 bonded and fixed to the underlying material 6 is filled with the putty 10. The putty 10 may be any known one that has been used in the field of architecture, and there is no particular limitation on it.

### Stripping step (e):

The gap 8 is filled with the putty 10 as described above. After the putty 10 is completely cured, the cover sheet 4 is stripped off exposing a finished surface 11 (surface of the decorative layer 3) as shown in Fig. 6 exhibiting a highly fancy design.

That is, the gap 8 filled with the putty 10 corresponds to the incision 8 and, as described already, is formed as the decorative layer 3 is torn along the incision 5, and is neatly extending along the corner portion of the underlying material 6 maintaining a predetermined width and good precision. Besides, even if the putty 10 being filled in the gap 8 overflows from the gap 8, the overflowed putty 10 can be removed by stripping the cover sheet 4 off. Despite the gap 8 is filled with the putty 10, therefore, the appearance of the finished surface 11 is not impaired. Besides, the operation for filling the putty 10 does not require any particular skill.

According to the method of the invention as described above, the decorative sheet 1 can be easily attached to the underlying material 6 without requiring skill making it possible to improve the workability, featuring high finishing precision by using putty, and forming the finishing surface 11 of a highly fancy design.

## Claims

1. A method of attaching a decorative sheet, by bonding, onto a surface of an underlying material having a corner portion, the decorative sheet having a substrate sheet and a decorative layer which comprises an inorganic cured material formed on one surface of the substrate sheet, said method including:
(a) a partly cutting step of preparing the decorative sheet equipped with a cover sheet which is formed on the surface of said decorative layer maintaining a stripping strength, and incising said decorative layer via said cover sheet leaving at least part of said substrate sheet in a portion of said decorative sheet corresponding to the corner portion of said underlying material;
(b) a folding step of folding said decorative sheet having incision formed in the decorative layer, in a manner that the substrate sheet is on the inside, to form a folded portion along said incision;
(c) a bonding step of positioning said decorative sheet in a manner that the folded portion of said decorative sheet is in agreement with the corner portion of the underlying material, and bonding the substrate sheet of said decorative sheet onto the surface of the underlying material by using an adhesive;
(d) an external corner-treating step of filling a putty in a gap resulting from the incision formed in the folded portion of said decorative sheet bonded to the surface of the underlying material; and
(e) a stripping step of stripping the cover sheet from said decorative sheet having the putty filled in said gap thereof.

2. The method of attaching a decorative sheet according to claim 1, wherein the cover sheet formed on the surface of the decorative layer of said decorative sheet has a stripping strength of 200 to 4000 mN/25 mm.

3. The method of attaching a decorative sheet according to claim 1, wherein the inorganic cured material forming said decorative layer is a calcium carbonate cured material formed by carbonating the calcium hydroxide.
